Europäisches Patentamt

European Patent Office

Office européen des brevets

(19)

(11) Publication number: **0 147 444**
**B1**

## (12) EUROPEAN PATENT SPECIFICATION

(45) Date of publication of patent specification: **07.09.88**

(51) Int. Cl.⁴: **G 02 B 6/38**

(21) Application number: **84902379.1**

(22) Date of filing: **25.05.84**

(86) International application number:
**PCT/SE84/00200**

(87) International publication number:
**WO 85/00061 03.01.85 Gazette 85/01**

(54) **DEVICE FOR POSITIONING THE END OF AN OPTICAL FIBRE IN A SLEEVE.**

(30) Priority: **14.06.83 SE 8302980**

(43) Date of publication of application:
**10.07.85 Bulletin 85/28**

(45) Publication of the grant of the patent:
**07.09.88 Bulletin 88/36**

(84) Designated Contracting States:
**CH DE FR GB LI NL**

(56) References cited:
**DE-A-3 151 092**
**US-A-4 188 087**
**US-A-4 300 815**
**US-A-4 380 366**

(73) Proprietor: **TELEFONAKTIEBOLAGET L M ERICSSON**
**S-126 25 Stockholm (SE)**

(72) Inventor: **SERRANDER, Hans, Roland**
**Bondegatan 25 A**
**S-116 33 Stockholm (SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 147 444 B1

## Description

Technical field

The present invention relates to a device for positioning the end of an optical fibre in a sleeve comprising an assembly of at least three mutually parallel rods, forming between themselves a passage accommodating the fibre end, one end of the assembly being intended for accommodation in the sleeve.

Background art

Such devices are known from DE—B2—2757216 and EP—B1—015046, for example. However, these known devices are complicated in their construction, and are therefore expensive to manufacture.

Disclosure of invention

The object of the present invention is to provide an apparatus of the kind described in the introduction that is easy and cheap to manufacture, and that allows precise positioning of an optical fibre, irrespective of their diameter.

This is achieved by the device in accordance with the invention disclosed in the claim.

Description of figures

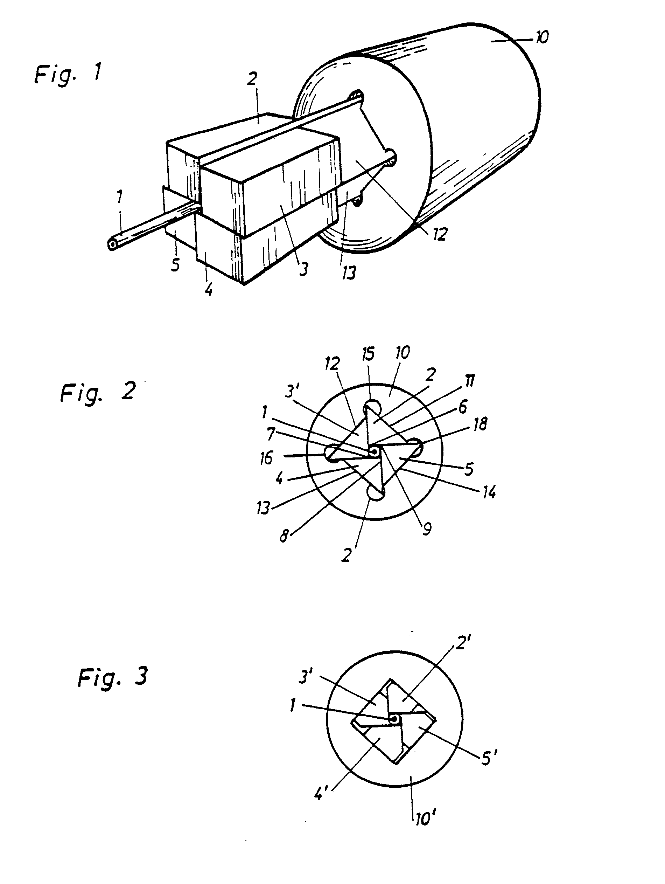

The invention will now be described in detail below with reference to the accompanying drawing, on which Figure 1 is a perspective view of an embodiment of a device in accordance with the invention, Figure 2 is an end view of a device according to Figure 1, and Figure 3 is an end view of a second embodiment of the device in accordance with the invention.

Preferred embodiments

Figure 1 illustrates an embodiment of a device in accordance with the invention for positioning the end of an optical fibre 1 in a sleeve 10. The illustrated embodiment includes four mutually parallel rods 2, 3, 4 and 5, forming between themselves a passage accommodating the end of the fibre 1, the sleeve 10 accommodating one end of each rod.

Each of the rods 2—5 has two planar adjacent surfaces, and in the illustrated case these surfaces meet each other at right-angles along a longitudinal edge 6, 7, 8, and 9, as in Figure 2. In accordance with the invention, one of the two planar surfaces on the respective rod engages against one of the two planar surfaces on a juxtaposed rod such that the longitudinal edge 6—9 of the respective rod 2—5 extend parallel to, and are distributed around the central axis of the passage for the fibre 1.

The rods 2—5 are mutually, displaceable in relation to this axis by sliding against their mutually engaging surfaces in order to change the size of the passage so as to enable the accommodation of fibres having different diameters.

The fibre and its surrounding rods may be glued to each other to ensure fixation of the rods with the fibre.

To enable the accommodation of the rods in a single sleeve 10 the ends of the rods 2—5 intended for insertion in the sleeve are formed with a third planar surface 11, 12, 13 and 14, which is preferably parallel to the longitudinal edge of the respective rod, and, in the present case, forms an angle of 45° with the other planar surfaces which intersect other at right-angles, each of which is contiguous with a corresponding surface on an adjacent rod. The other ends of the rods are formed with a quadratic section in the illustrated embodiment, but may of course be formed in some other way.

In the embodiment illustrated in Figures 1 and 2, the ends of the rods 2—5 inserted in the sleeve 10 are shaped so as to have cross-sections in the form of identical isosceles right-angular triangles. In this embodiment the interior walls of the sleeve 10 enclose a cavity of substantially quadratic cross-section. To enable the accommodation in the sleeve of mutually displaced rods for placing fibres of different diameters between the rods, the sleeve is provided with longitudinal recesses 15, 16, 17 and 18 between adjacent mutually perpendicular interior walls. The size of the recesses 15—18 depends on the diameter of the fibre 1 that is to be placed between the rods 2—5.

An alternative embodiment is illustrated in Figure 3. Here, the sleeve 10 has a cavity of purely quadratic cross-section for accommodating the rod ends. These, denoted 2', 3', 4' and 5', are chamfered in a manner illustrated in Figure 3, to enable their reception in the sleeve 10' when mutually displaced, thus enabling fibres of different diameters to be placed between the rods.

The rod ends inserted in the sleeve naturally do not need to be identical, but the advantage in doing this is that the set of rods may be inserted in the sleeve in any order.

A similar set of rods may be inserted in the other end of the sleeve 10 illustrated in Figure 1, to obtain optical coupling between the fibre 1 and the not illustrated fibre in the other set of rods.

The invention is naturally not confined to the use of four rods, it being possible to use three, five or more. In all cases, however, the sum of the angles between the respective rods' adjacent surfaces forming the edges 6—9 must attain 360°C. In the case of three identical rods, this angle will thus be 120°, while the angle between the third planar surface of the respective rod and each of its other two flat surfaces will be 60°.

## Claim

Device for positioning the end of an optical fibre (1) in a sleeve (10) comprising an assembly of at least three mutually parallel rods (2, 3, 4, 5) forming between themselves a passage for accommodating the fibre end, one end of the assembly being intended for accommodation in the sleeve (10), characterized in that each rod has a first and a second planar surface, both said surfaces intersecting each other to form a longitudinal edge (6, 7, 8, 9) such that, in use, when the rods are assembled, opposing pairs of these surfaces bear flat against one another and are mutually displaced so that said longitudinal edges of the rods extend parallel to, and are distributed around the central axis of said passage the contiguous surfaces being capable of sliding over each other to change the size of the passage to suit different fibre diameters; and in that, for each rod, the respective end intended for insertion in the sleeve (10) has a third planar surface (11, 12, 13, 14) whose plane forms equally as great an angle of intersection with the planes of the surfaces already mentioned, the third surface being intended to engage a corresponding planar surface in the sleeve (10).

## Patentanspruch

Vorrichtung zur Positionierung des Endes einer Lichtleiterfaser (1) in einer Hülse (10), die aus einer Anordnung von mindestens drei zueinander parallelen Stäben (2, 3, 4, 5) besteht, die zwischen sich eine Durchtrittsöffnung zur Aufnahme des Faserendes bilden, wobei eine Ende der Anordnung zur Aufnahme in der Hülse (10) bestimmt ist, dadurch gekennzeichnet, dass jeder Stab eine erste und eine zweite planare Fläche aufweist, dass beide Flächen sich unter Ausbildung einer Längskante (6, 7, 8, 9) schneiden, so dass im Gebrauch bei zusammengebauten Stäben die sich gegenüberliegenden Paare dieser Flächen flach gegeneinander legen und gegenseitig derart verschoben sind, dass die Längskanten der Stäbe parallel zueinander verlaufen und um die Mittelachse der Durchtrittsöffnung verteilt sind, dass die zueinander benachbarten Flächen übereinander gleiten können, um die Grösse der Durchtrittsöffnung zu ändern, damit sie für unterschiedliche Faserdurchmesser geeignet ist, und dass für jeden Stab das jeweilige, zur Einfügung in die Hülse (10) bestimmte Ende eine dritte planare Fläche (11, 12, 13, 14) aufweist, dessen Ebene einen gleich grossen Schnittwinkel mit den Ebenen der bereits erwähnten Oberflächen bildet, wobei die dritte Fläche dazu bestimmt ist, einen zugeordnete planare Fläche in der Hülse (10) zu erfassen.

## Revendication

Dispositif pour positionner l'extrémité d'une fibre optique (1) dans un manchon (10) comprenant un assemblage d'au moins trois barreaux mutuellement parallèles (2, 3, 4, 5) formant entre eux un passage pour recevoir l'extrémité de la fibre, une extrémité de l'assemblage étant destinée à être logée dans le manchon (10), caractérisé en ce que chaque barreau présente des première et deuxième surfaces planes, qui se coupent mutuellement pour former une arête longitudinale (6, 7, 8, 9) afin que, lors de l'utilisation, lorsque les barreaux sont assemblés, des paires opposées de ces surfaces portent à plat l'une contre l'autre et soient déplacées mutuellement pour que lesdites arêtes longitudinales des barreaux s'étendent parallèlement à l'axe central dudit passage et soient réparties autour de cet axe central, les surfaces contiguës pouvant glisser l'une contre l'autre afin de modifier la dimension du passage pour qu'elle convienne à des diamètres de fibres différents; et en ce que, pour chaque barreau, l'extrémité respective devant être insérée dans le manchon (10) présente une troisième surface plane (11, 12, 13, 14) dont le plan forme un angle d'intersection aussi grand avec les plans des surfaces mentionnés précédemment, la troisième surface étant destinée à porter contre une surface plane correspondante située dans le manchon (10).

Fig. 1

Fig. 2

Fig. 3